# EUROPÄISCHE PATENTSCHRIFT

(11) **EP 2 233 353 B1**
(45) Veröffentlichungstag und Bekanntmachung des Hinweises auf die Patenterteilung: **23.04.2014**
(21) Anmeldenummer: 09004224.3
(22) Anmeldetag: 25.03.2009
(51) Int. Cl.: B60N 3/14

(54) **Zigarettenanzünder, insbesondere für Kraftfahrzeuge**
Cigarette lighter, in particular for a motor vehicle
Allume-cigare, en particulier pour véhicules automobiles

(43) Veröffentlichungstag der Anmeldung: 29.09.2010
(73) Patentinhaber: Casco Schoeller GmbH, 60437 Frankfurt am Main (DE)
(72) Erfinder: Schwarzbach, Ronald, 60439 Frankfurt (DE); Tritschler, Jörg, 35510 Kirch-Göns (DE); Baldauf, Albert, 63456 Hanau (DE)
(74) Vertreter: Oppermann, Frank

(56) Entgegenhaltungen:
- DE-A1- 2 436 434
- DE-A1- 2 943 007

## Beschreibung

Die Erfindung betrifft einen Zigarettenanzünder, insbesondere für Kraftfahrzeuge, der eine Aufnahmeeinheit und eine in die Aufnahmeeinheit einsetzbare Zündeinheit aufweist.

Die im Stand der Technik bekannten Zigarettenanzünder, die in Kraftfahrzeugen Verwendung finden, umfassen eine im Allgemeinen in der Mittelkonsole des Fahrzeugs befindliche Aufnahmeeinheit, und eine in die Aufnahmeeinheit einsetzbare Zündeinheit.

Die Zündeinheit des Zigarettenanzünders weist eine elektrische Glüheinheit und ein Betätigungselement auf, während die Aufnahmeeinheit über eine Kontakteinheit verfügt, die mit dem Bordnetz des Fahrzeugs elektrisch verbunden ist, um die Glüheinheit mit Strom versorgen zu können, wenn die Zündeinheit in die Aufnahmeeinheit eingesetzt ist.

Zur Herstellung der elektrischen Verbindung zwischen Kontakteinheit und Glüheinheit wird ein Betätigungselement des Zigarettenanzünders betätigt, das beispielsweise als Druckknopf ausgebildet ist. Der Druckknopf ist mit einer Druckfeder aus einer ersten Position, in der ein elektrischer Kontakt zwischen Kontakteinheit und Glüheinheit hergestellt ist, in eine zweite Position federnd vorgespannt, in der der Kontakt Kontakteinheit und Glüheinheit unterbrochen ist.

Ein Zigarettenanzünder der o.g. Art ist beispielsweise aus der DE 29 43 007 Al bekannt. Bei dem bekannten Zigarettenanzünder wird die Zündeinheit in der ersten Position, in der die Glüheinheit mit Strom versorgt wird, mittels einer Bimetall-Feder gehalten. Wenn die Zündeinheit mit Strom versorgt wird, erwärmt sich die Bimetall-Feder, so dass sich die Rastverbindung löst. Die Rückstellkraft der Druckfeder bewirkt dann, dass sich der Druckknopf in die Ausgangsstellung bewegt, so dass die Zündeinheit der Aufnahmeeinheit entnommen werden kann. Die Bimetall-Feder ist bei dem bekannten Zigarettenanzünder in die Aufnahmeeinheit integriert.

Ein Zigarettenanzünder mit dem gleichen Aufbau ist aus der DE 24 36 434 A1 bekannt. Der bekannte Zigarettenanzünder verfügt über eine Bimetall-Feder, mit der die Glüheinheit entgegen der Spannung der Druckfeder verrastet wird, wenn der Druckknopf in die Zündeinheit gedrückt wird. Die Bimetall-Feder befindet sich wieder in der Aufnahmeeinheit des Zigarettenanzünders.

Zigarettenanzünder mit einer in die Aufnahmeeinheit integrierten Bimetall-Feder zum Arretieren der Glüheinheit während des Heizvorgangs sind beispielsweise auch aus der DE 1 013 103 B1, DE 25 35 079 A1 und FR 2 343 404 A7 bekannt.

Die bekannten Zigarettenanzünder, deren Bimetall-Feder in die Aufnahmeeinheit integriert ist, haben sich in der Praxis bewährt. Nachteilig ist jedoch, dass die Bimetall-Feder in der Aufnahmeeinheit beschädigt werden kann, da nach dem Herausnehmen der Zündeinheit die Bimetall-Feder in der Aufnahmeeinheit freiliegt. So können verschiedene im Handel erhältliche Adapterstecker für Zigarettenanzünder die Beschädigung hervorrufen. Ebenso können Beschädigungen durch unsachgemäßen Gebrauch verursacht werden.

Der Erfindung liegt daher die Aufgabe zugrunde, einen zuverlässig arbeitenden Zigarettenanzünder, insbesondere für Kraftfahrzeuge, zu schaffen, bei dem eine geringe Gefahr der Beschädigung des Bimetall-Thermostats durch eine unsachgemäße Handhabung oder die Verwendung eines Adaptersteckers besteht.

Die Lösung dieser Aufgabe erfolgt erfindungsgemäß mit den Merkmalen des Patentanspruchs 1. Vorteilhafte Ausfiihrungsformen der Erfindung sind Gegenstand der Unteransprüche.

Der erfindungsgemäße Zigarettenanzünder zeichnet sich dadurch aus, dass die Zündeinheit sowohl ein Bimetall-Rückhaltefederelement als auch ein Arretierungselement aufweist. Da das Bimetall-Rückhaltefederelement nicht in die Aufnahmeeinheit, sondern die Zündeinheit integriert ist, besteht nicht die Gefahr, dass das relativ empfindliche Bimetall-Rückhaltefederelement nach dem Herausnehmen der Zündeinheit aus der Aufnahmeeinheit in der Aufnahmeeinheit freiliegt. Auch die im Handel erhältlichen Adapterstecker, die in die Aufnahmeeinheit eingesetzt werden, können das Bimetall-Rückhaltefederelement nicht beschädigen.

Das Bimetall-Rückhaltefederelement kann aus einer oder mehreren Bimetall-Federn bestehen. Auch das Arretierungselement kann aus einer oder mehreren Teilen bestehen. Allein entscheidend ist, dass das Rückhaltefederelement durch Erwärmung aufgrund der Eigenschaften des Bimetalls sich von dem Arretierungselement löst.

Das Bimetall-Rückhaltefederelement und das Arretierungselement sind vorzugsweise als elektrische Kontaktelemente ausgebildet, mit denen ein elektrischer Kontakt zwischen der Kontakteinheit der Aufnahmeeinheit und der Glüheinheit der Zündeinheit hergestellt werden kann. Damit dienen Bimetall-Rückhaltefederelement und Arretierungselement nicht nur als Teile einer Rastverbindung, sondern auch zur elektrischen Kontaktierung des Glüheinsatzes in der Zündeinheit mit der Kontakteinheit in der Aufnahmeeinheit. Rückhaltefederelement und Arretierungselement können als Kontaktelemente für den Hinleiter und Rückleiter oder nur als Kontaktelemente für Hin- oder Rückleiter dienen.

Bei der Ausführungsform, bei der Rückhaltefederelement und Arretierungselement nur als elektrische Kontaktelemente für den Hinleiter ausgebildet sind, bilden die Gehäusekörper der Aufnahmeeinheit und der Zündeinheit, die aus einem elektrisch leitenden Material bestehen, die Kontaktelemente für den Rückleiter. Folglich kann der Strom über Rückhaltefederelement und Arretierungselement von der Kontakteinheit zu der Glüheinheit und von der Glüheinheit über die ineinander gesteckten Gehäusekörper der Zündeinheit und der Aufnahmeeinheit zurück zu der Kontakteinheit fließen.

Bei einer bevorzugten Ausfi.ihrungsform ist das Arretierungselement als rotationssymmetrischer Körper mit einem umlaufenden Ansatz ausgebildet, wobei das Bimetall-Rückhaltefederelement den umlaufenden Ansatz des Arretierungselements umgreift, wenn das Betätigungselement sich in der ersten Position befindet, in der ein elektrischer Kontakt zwischen Kontakteinheit und Glüheinheit hergestellt ist. Beispielsweise kann das Arretierungselement als tellerförmiger Körper ausgebildet sein. Vorzugsweise weist das Bimetall-Rückhaltefederelement zwei einander gegenüberliegend angeordnete Schenkel auf. Es können aber auch mehr als zwei umfangsmäßig verteilt angeordnete Bimetall-Federn vorgesehen sein, die das Rückhalteelement von allen Seiten umgreifen.

Eine besonders bevorzugte Ausführungsform der Erfindung sieht vor, dass das Bimetall-Rückhaltefederelement in der Zündeinheit zwischen der Druckfeder und der Glüheinheit angeordnet ist. Dadurch wird erreicht, dass das empfindliche Bimetall-Rückhaltefederelement nicht freiliegt, sondern in der Zündeinheit von der Glüheinheit vor Beschädigungen geschützt wird.

Das Betätigungselement des erfindungsgemäßen Zigarettenanzünders ist vorzugsweise ein Druckknopf, der zum Aufheizen der Glüheinheit in die Zündeinheit gedrückt wird und nach dem Aufheizen der Glüheinheit durch die Vorspannung der Druckfeder in die Ausgangsstellung zurückspringt.

Bei einer besonders bevorzugten Ausführungsform weist die Zündeinheit einen sich durch die Druckfeder erstreckenden stiftförmigen Körper auf, an dessen einem Ende der Druckknopf und an dessen anderem Ende das Bimetall-Rückhaltefederelement befestigt ist.

Eine weitere besonders bevorzugte Ausführungsform sieht ein das Arretierungselement und die Glüheinheit miteinander verbindenden stiftförmigen Körper vor, der vorzugsweise aus einem stark wärmeleitendem Material, beispielsweise Metall besteht, so dass die Wärme der Glüheinheit auf das Bimetall-Rückhaltefederelement übertragen wird.

Im Folgenden wird die Erfindung unter Bezugnahme auf die Zeichnungen im Einzelnen beschrieben.

Es zeigen:
- Fig. 1: ein Ausführungsbeispiel des erfindungsgemäßen Zigarettenanzünders in geschnittener Darstellung vor Betätigung des Druckknopfs und
- Fig. 2: den erfindungsgemäßen Zigarettenanzünder von Fig. 2 in geschnittener Darstellung nach Betätigung des Druckknopfs.

Der erfindungsgemäße Zigarettenanzünder, insbesondere für Kraftfahrzeuge, umfasst eine Aufnahmeeinheit 200 und eine in die Aufnahmeeinheit einsetzbare Zündeinheit 100. Die Aufnahmeeinheit 200 weist einen hülsenförmigen Gehäusekörper 202 aus Metall auf, der einen unteren Abschnitt 202A und einen oberen Abschnitt 202B umfasst. Der untere Abschnitt 202A des hülsenförmigen Gehäusekörpers 202 nimmt eine Kontakteinheit 204 auf. Die Kontakteinheit 204 weist einen ersten Anschlusskontakt 206 und einen zweiten Anschlusskontakt 208 auf, die über einen geeigneten Steckverbinder mit einem Anschlusskabel elektrisch verbunden werden können, das zu der Batterie des Fahrzeugs führt. Der erste Anschlusskontakt 206 ist elektrisch mit einem Kontakt-Federelement 210 verbunden, das zwei einander sich gegenüberliegend angeordnete Kontaktfedern 210A, 210B aufweist, die sich aus der Gehäuseöffnung des hülsenförmigen Gehäusekörpers 202 nach außen erstrecken. Der zweite Anschlusskontakt 208 ist elektrisch mit dem metallischen Gehäusekörper 202 verbunden.

Die Zündeinheit 100 weist einen hülsenförmigen Gehäusekörper 102 aus einem metallischen Material auf, der passend in den oberen Abschnitt 202B des hülsenförmigen Gehäusekörpers 202 der Aufnahmeeinheit 200 eingesetzt ist.

In dem unteren Abschnitt 102A des Gehäusekörpers 102 der Zündeinheit 100 befindet sich eine elektrische Glüheinheit 104, bei der es sich um einen Widerstandsdraht handelt, der zu einer Spule gewickelt ist. Die Glüheinheit 104 ist an dem unteren Ende eines stiftförmigen Körpers 106 aus elektrisch leitendem, metallischem Material befestigt, an dessen oberem Ende ein Arretierungselement 108 aus metallischem Material befestigt ist. Das Arretierungselement 108 ist ein rotationssymmetrischer Körper mit einem umlaufenden Ansatz 108A. Zwischen Arretierungselement 108 und Glüheinheit 104 ist eine Isolationseinheit 110 zur elektrischen und thermischen Isolation der Glüheinheit 104 von dem übrigen Teil der Zündeinheit 100 angeordnet.

Der eine elektrische Anschluss der Glüheinheit 104 ist mit einem rotationssymmetrischen Kontaktnapf 112 elektrisch verbunden, die mit den sich gegenüberliegenden Kontaktfedern 210A, 210B der Aufnahmeeinheit 200 kontaktieren, wenn die Zündeinheit 100 in die Aufnahmeeinheit 200 eingesetzt ist. Der andere Anschlusskontakt der Glüheinheit 104 ist elektrisch mit dem Arretierungselement 108 verbunden.

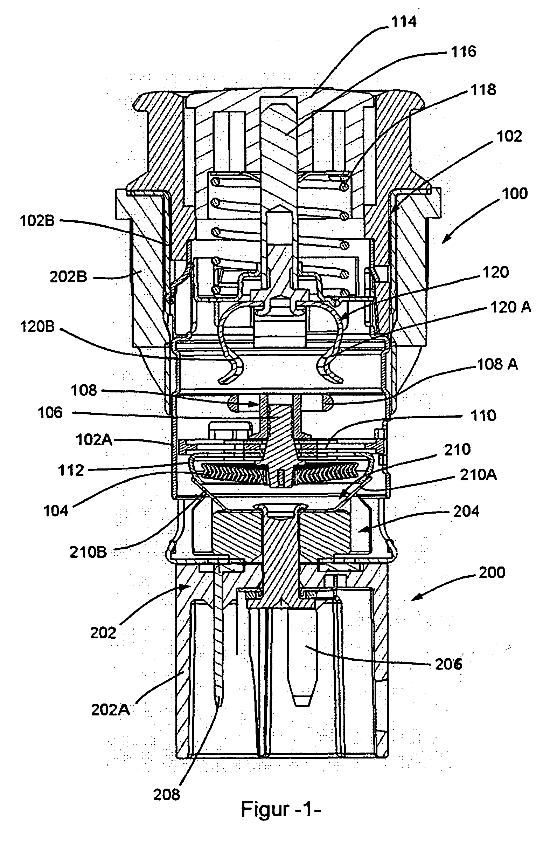

Der obere Abschnitt 102B des hülsenförmigen Gehäusekörpers 102 der Zündeinheit 100 nimmt einen Druckknopf 114 auf, der an dem oberen Ende eines stiftförmigen Körpers 116 aus einem elektrisch leitenden, metallischen Material befestigt ist, der sich durch eine Druckfeder 118 erstreckt. Die Druckfeder 118 hält den Druckknopf 114 in die in Fig. 1 gezeigte Ausgangsstellung federnd vorgespannt, an der die Oberseite des Druckknopfs 114 bündig mit der Oberseite des Gehäusekörpers 102 abschließt. In dieser Ausgangsstellung ist der Stromfluss zu der Glüheinheit unterbrochen.

Zum Aufheizen der Glüheinheit wird der Druckknopf 114 in den Gehäusekörper 102 der Zündeinheit 100 gedrückt, so dass der Druckknopf einrastet. Nachfolgend wird die Rastverbindung im Einzelnen beschrieben.

An dem unteren Ende des stiftförmigen Körpers 116 ist ein Bimetall-Rückhaltefederelement 120 in Form einer Bimetall-Feder mit zwei sich einander gegenüberliegenden Schenkeln 120A, 120B befestigt, die sich von dem stiftförmigen Körper 116 nach unten erstrecken. Wenn der Druckknopf 114 in den Gehäusekörper 102 der Zündeinheit 100 gedrückt wird, umgreifen die Schenkel 120A, 120B des Bimetall-Rückhaltefederelements 120 den umlaufenden Ansatz 108A des Arretierungselements 108. Dadurch ist der Druckknopf 114 einrastend festgelegt.

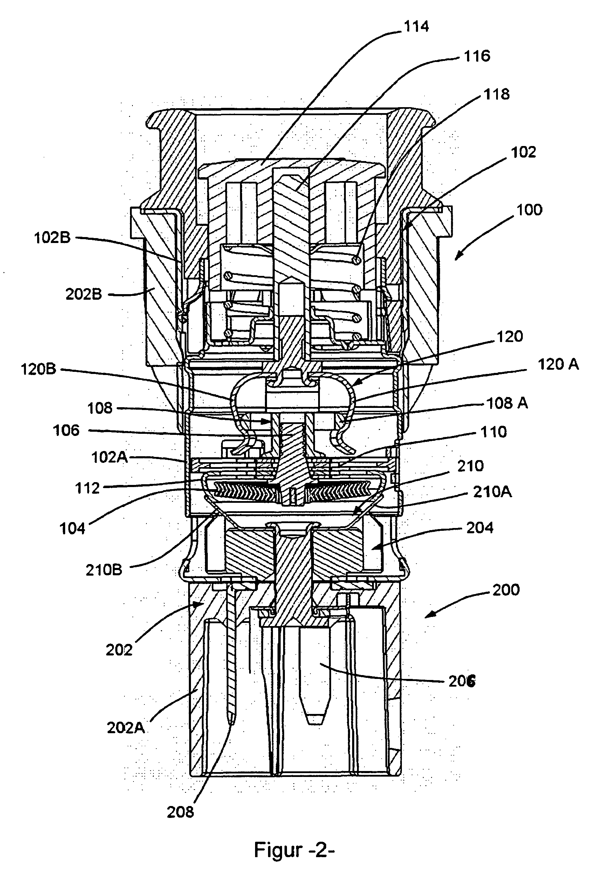

In der in Fig. 2 gezeigten Position wird die Glüheinheit 104 mit Strom versorgt. Der Strom fließt von dem nicht gezeigten Anschlusskabel über den Anschlusskontakt 206 der Kontakteinheit 204, die Kontaktfedern 210A, 210B der Aufnahmeeinheit 200, über den Kontaktnapf 112 der Zündeinheit 100 und über den metallischen stiftförmigen Körper 106 zu dem metallischen Arretierungselement 108, das elektrisch mit den Bimetall-Federelementen 120A, 120B verbunden ist. Von den Bimetall-Federelement 120 fließt der Strom über den metallischen stiftförmigen Körper 116, der elektrisch mit dem metallischen Gehäusekörper 102 der Zündeinheit 100 verbunden ist, zu dem metallischen Gehäusekörper 202 der Aufnahmeeinheit 200, der in den Gehäusekörper der Zündeinheit 100 eingesetzt ist. Folglich kann der Strom über den zweiten Anschlusskontakt 208 zurückfließen, der elektrisch mit dem Gehäusekörper 202 der Aufnahmeeinheit 200 verbunden ist.

Beim Aufheizen der Glüheinheit 104 erwärmt sich auch das Bimetall-Rückhaltefederelement 120. Das Bimetall-Rückhaltefederelement 120 ist derart ausgebildet, dass sie sich dessen Schenkel 120A, 120B bei Erwärmung nach außen spreizen, wodurch die Rastverbindung zwischen der Bimetall-Rückhaltefeder 120 und dem Arretierungselement 108 gelöst wird. Dieser Vorgang dauert solange, bis die Glüheinheit 104 die Betriebstemperatur erreicht hat. Zu diesem Zeitpunkt springt der Druckknopf 114 aufgrund der federnden Vorspannung durch die Druckfeder 118 wieder in die Ausgangsstellung zurück, so dass der Stromfluss unterbrochen ist. Die aufgeheizte Zündeinheit 100 kann nunmehr aus der Aufnahmeeinheit 200 herausgezogen werden, um eine Zigarette anzuzünden.

Aus den Fig. 1 und 2 ist ersichtlich, dass das Bimetall-Rückhaltefederelement 120 nicht in der Aufnahmeeinheit 200, sondern der Zündeinheit 100 angeordnet ist. Wenn die Zündeinheit 100 aus der Aufnahmeeinheit 200 herausgezogen ist, kann das Bimetall-Rückhaltefederelement 120 also nicht beschädigt werden. Auch in der Zündeinheit kann das Rückhaltefederelement 120 nicht beschädigt werden, da es sicher zwischen dem Druckknopf 114 und der Glüheinheit 104 in dem Gehäusekörper 102 der Zündeinheit 100 angeordnet ist.

## Patentansprüche

1. Zigarettenanzünder, insbesondere für Kraftfahrzeuge, der eine Aufnahmeeinheit (200) mit einer Kontakteinheit (204) und eine in die Aufnahmeeinheit einsetzbare Zündeinheit (100) aufweist, die eine elektrische Glüheinheit (104) und ein Betätigungselement (114) aufweist, wobei das Betätigungselement (114) mit einer Druckfeder (118) aus einer ersten Position, in der ein elektrischer Kontakt zwischen der Kontakteinheit der Aufnahmeeinheit und der elektrischen Glüheinheit der Zündeinheit hergestellt ist, in eine zweite Position federnd vorgespannt ist, in der ein elektrischer Kontakt zwischen der Kontakteinheit und der Glüheinheit nicht hergestellt ist,
**dadurch gekennzeichnet, dass**
die Zündeinheit (104) ein Bimetall-Rückhaltefederelement (120) und ein Arretierungselement (108) aufweist, wobei in der ersten Position des Betätigungselements (114), in der ein elektrischer Kontakt zwischen Kontakteinheit und Glüheinheit hergestellt ist, das Bimetall-Rückhaltefederelement (120) mit dem Arretierungselement (108) derart verrastet ist, dass nach dem Aufheizen des Bimetall-Rückhaltefederelements durch die Glüheinheit (104) die Rastverbindung gelöst wird, so dass das Betätigungselement durch die Vorspannung der Druckfeder (118) in die zweite Position bewegt wird, in der ein elektrischer Kontakt zwischen Kontakteinheit und Glüheinheit nicht hergestellt ist und die Zündeinheit der Aufnahmeeinheit entnommen werden kann.

2. Zigarettenanzünder nach Anspruch 1, **dadurch gekennzeichnet, dass** das Bimetall-Rückhaltefederelement (120) und das Arretierungselement (108) als elektrische Kontaktelemente ausgebildet sind, mit denen ein elektrischer Kontakt zwischen der Kontakteinheit der Aufnahmeeinheit (200) und der Glüheinheit (104) der Zündeinheit (100) hergestellt werden kann.

3. Zigarettenanzünder nach Anspruch 1 oder 2, **dadurch gekennzeichnet, dass** das Arretierungselement (108) als rotationssymetrischer Körper mit einem umlaufenden Ansatz (108A) ausgebildet ist, wobei das Bimetall-Rückhaltefederelement (120) den umlaufenden Ansatz des Arretierungselements in der ersten Position des Betätigungselements (114) umgreift.

4. Zigarettenanzünder nach einem der Ansprüche 1 bis 3, **dadurch gekennzeichnet, dass** das Bimetall-Rückhaltefederelement (120) zwei einander gegenüberliegend angeordnete Schenkel (120A, 120B) aufweist.

5. Zigarettenanzünder nach einem der Ansprüche 1 bis 4, **dadurch gekennzeichnet, dass** das Bimetall-Rückhaltefederelement (120) in der Zündeinheit (100) zwischen der Druckfeder (118) und der Glüheinheit (104) angeordnet ist.

6. Zigarettenanzünder nach einem der Ansprüche 1 bis 5 **dadurch gekennzeichnet, dass** das Betätigungselement ein Druckknopf (114) ist.

7. Zigarettenanzünder nach Anspruch 6, **dadurch gekennzeichnet, dass** die Zündeinheit (100) einen sich durch die Druckfeder (118) erstreckenden stiftförmigen Körper (116) aufweist, an dessen einen Ende der Druckknopf (114) und an dessen anderen Ende das Bimetall-Rückhaltefederelement (120) befestigt ist.

8. Zigarettenanzünder nach einem der Ansprüche 1 bis 7, **dadurch gekennzeichnet, dass** die Zündeinheit (100) einen das Arretierungselement (118) und die Glüheinheit (104) miteinander verbindenden stiftförmigen Körper (106) aufweist.

9. Zigarettenanzünder nach einem der Ansprüche 1 bis 8, **dadurch gekennzeichnet, dass** die Aufnahmeeinheit (200) und die Zündeinheit (200) Gehäusekörper (202, 102) aus einem elektrisch leitenden Material aufweisen, wobei der Gehäusekörper (202) der Aufnahmeeinheit (200) elektrisch mit dem Gehäusekörper (102 der Zündeinheit (100) verbunden ist, wenn die Zündeinheit (100) in die Aufnahmeeinheit (200) eingesetzt ist.

10. Zigarettenanzünder nach Anspruch 9, **dadurch gekennzeichnet, dass** die Kontakteinheit (204) der Aufnahmeeinheit (200) einen elektrischen Anschlusskontakt (206) aufweist, der elektrisch mit einem Kontakt-Federelement (210) der Aufnahmeeinheit (200) verbunden ist, und einen zweiten elektrischen Anschlusskontakt (208) aufweist, der elektrisch mit dem elektrisch leitenden Gehäusekörper (202) der Aufnahmeeinheit (200) verbunden ist, wobei das Arretierungselement (108) aus einem elektrisch leitenden Material besteht und der erste elektrische Anschlusskontakt (206) der Aufnahmeeinheit mit dem Arretierungselement (108) elektrisch verbunden ist, wenn die Zündeinheit (100) in die Aufnahmeeinheit (200) eingesetzt ist.

## Claims

1. Cigarette lighter, in particular for a motor vehicle, comprising a receiving unit (200) having a contact unit (204) and an ignition unit (100) which can be inserted into the receiving unit and comprises an electrical heating unit (104) and an actuation element (114), the actuation element (114) being resiliently biased, by means of a compression spring (118), out of a first position, in which an electrical contact is produced between the contact unit of the receiving unit and the electrical heating unit of the ignition unit, into a second position, in which an electrical contact is not produced between the contact unit and the heating unit,
**characterised in that**
the ignition unit (104) comprises a bimetal retaining spring element (120) and a locking element (108), the bimetal retaining spring element (120), when the actuation element (114) is in the first position, in which an electrical contact is produced between the contact unit and the heating unit, being latched with the locking element (108) such that the latch connection is released once the bimetal retaining spring element has been heated by the heating unit (104), so that the actuation element is moved by the bias of the compression spring (118) into the second position, in which an electrical contact is not produced between the contact unit and the heating unit, and the ignition unit of the receiving unit can be removed.

2. Cigarette lighter according to claim 1, **characterised in that** the bimetal retaining spring element (120) and the locking element (108) are formed as electrical contact elements by means of which an electrical contact can be produced between the contact unit of the receiving unit (200) and the heating unit (104) of the ignition unit (100).

3. Cigarette lighter according to either claim 1 or claim 2, **characterised in that** the locking element (108) is formed as a rotationally symmetrical body having a circumferential extension (108A), the bimetal retaining spring element (120) encompassing the circumferential extension of the locking element when the actuation element (114) is in the first position.

4. Cigarette lighter according to any of claims 1 to 3, **characterised in that** the bimetal retaining spring element (120) comprises two legs (120A, 120B) arranged opposite one another.

5. Cigarette lighter according to any of claims 1 to 4, **characterised in that** the bimetal retaining spring element (120) is arranged in the ignition unit (100) between the compression spring (118) and the heating unit (104).

6. Cigarette lighter according to any of claims 1 to 5, **characterised in that** the actuation element is a pushbutton (114).

7. Cigarette lighter according to claim 6, **characterised in that** the ignition unit (100) comprises a pin-shaped body (116) which extends through the compression spring (118) and on one end of which the pushbutton (114) is attached and on the other end of which the bimetal retaining spring element (120) is attached.

8. Cigarette lighter according to any of claims 1 to 7, **characterised in that** the ignition unit (100) comprises a pin-shaped body (106) which interconnects the locking element (118) and the heating unit (104).

9. Cigarette lighter according to any of claims 1 to 8, **characterised in that** the receiving unit (200) and the ignition unit (200) comprise housing bodies (202, 102) made of an electrically conductive material, the housing body (202) of the receiving unit (200) being electrically connected to the housing body (102) of the ignition unit (100) when the ignition unit (100) is inserted into the receiving unit (200).

10. Cigarette lighter according to claim 9, **characterised in that** the contact unit (204) of the receiving unit (200) comprises an electrical terminal contact (206), which is electrically connected to a contact spring element (210) of the receiving unit (200), and a second electrical terminal contact (208), which is electrically connected to the electrically conductive housing body (202) of the receiving unit (200), the locking element (108) consisting of an electrically conductive material and the first electrical terminal contact (206) being electrically connected to the locking element (108) when the ignition unit (100) is inserted into the receiving unit (200).

## Revendications

1. Allume-cigares notamment destiné à des véhicules automobiles, comprenant une unité de réception (200) pourvue d'une unité de contact (204), et une unité d'allumage (100) qui peut être insérée dans ladite unité de réception, et comporte une unité électrique incandescente (104) et un élément d'actionnement (114), ledit élément d'actionnement (114) étant précontraint élastiquement, par un ressort de pression (118), d'une première position dans laquelle un contact électrique est établi entre l'unité de contact de l'unité de réception et l'unité électrique incandescente de l'unité d'allumage, à une seconde position dans laquelle un contact électrique n'est pas établi entre ladite unité de contact et ladite unité incandescente,
**caractérisé par le fait que**
l'unité d'allumage (104) présente un élément de retenue (120) à ressort bilame et un élément d'arrêt (108), sachant que, dans la première position de l'élément d'actionnement (114) dans laquelle un contact électrique est établi entre l'unité de contact et l'unité incandescente, ledit élément de retenue (120) à ressort bilame s'encliquette sur ledit élément d'arrêt (108) de façon telle que la liaison encliquetée soit dissociée après que ledit élément de retenue à ressort bilame a été chauffé par ladite unité incandescente (104), ledit élément d'actionnement étant ainsi mû, sous l'action de la précontrainte du ressort de pression (118), jusqu'à la seconde position dans laquelle un contact électrique n'est pas établi entre ladite unité de contact et ladite unité incandescente, et l'unité d'allumage peut être retirée de l'unité de réception.

2. Allume-cigares selon la revendication 1, **caractérisé par le fait que** l'élément de retenue (120) à ressort bilame, et l'élément d'arrêt (108), sont réalisés sous la forme d'éléments électriques de contact par lesquels un contact électrique peut être établi entre l'unité de contact de l'unité de réception (200) et l'unité incandescente (104) de l'unité d'allumage (100).

3. Allume-cigares selon la revendication 1 ou 2, **caractérisé par le fait que** l'élément d'arrêt (108) est réalisé sous la forme d'un corps à symétrie de révolution, doté d'un appendice périphérique (108A), l'élément de retenue (120) à ressort bilame ceinturant ledit appendice périphérique dudit élément d'arrêt dans la première position de l'élément d'actionnement (114).

4. Allume-cigares selon l'une des revendications 1 à 3, **caractérisé par le fait que** l'élément de retenue (120) à ressort bilame présente deux branches (120A, 120B) pointant à l'opposé l'une de l'autre.

5. Allume-cigares selon l'une des revendications 1 à 4, **caractérisé par le fait que** l'élément de retenue (120) à ressort bilame est interposé, dans l'unité d'allumage (100), entre le ressort de pression (118) et l'unité incandescente (104).

6. Allume-cigares selon l'une des revendications 1 à 5, **caractérisé par le fait que** l'élément d'actionnement est un bouton-poussoir (114).

7. Allume-cigares selon la revendication 6, **caractérisé par le fait que** l'unité d'allumage (100) présente un corps (116) configuré en une broche et parcourant le ressort de pression (118), à l'une et à l'autre des extrémités duquel le bouton-poussoir (114) et l'élément de retenue (120) à ressort bilame sont respectivement fixés.

8. Allume-cigares selon l'une des revendications 1 à 7, **caractérisé par le fait que** l'unité d'allumage (100) présente un corps (106) configuré en une broche, qui relie mutuellement l'élément d'arrêt (118) et l'unité incandescente (104).

9. Allume-cigares selon l'une des revendications 1 à 8, **caractérisé par le fait que** l'unité de réception (200) et l'unité d'allumage (200) présentent des corps de boîtiers (202, 102) en un matériau électriquement conducteur, le corps de boîtier (202) de ladite unité de réception (200) étant connecté électriquement au corps de boîtier (102) de ladite unité d'allumage (100) lorsque ladite unité d'allumage (100) est insérée dans ladite unité de réception (200).

10. Allume-cigares selon la revendication 9, **caractérisé par le fait que** l'unité de contact (204) de l'unité de réception (200) présente un contact électrique de raccordement (206), connecté électriquement à un élément (210) à ressort de contact de ladite unité de réception (200), et un second contact électrique de raccordement (208) qui est connecté électriquement au corps de boîtier (202) électriquement conducteur de ladite unité de réception (200), l'élément d'arrêt (108) étant constitué d'un matériau électriquement conducteur, et le premier contact électrique de raccordement (206) de ladite unité de réception étant connecté électriquement audit élément d'arrêt (108) lorsque l'unité d'allumage (100) est insérée dans ladite unité de réception (200).
